Europäisches Patentamt

**European Patent Office**

**Office européen des brevets**

(11) Publication number: **0 244 549**
**B1**

(12) # EUROPEAN PATENT SPECIFICATION

(45) Date of publication of the patent specification:
**19.09.90**

(51) Int. Cl.⁵: **B60K 5/10**

(21) Application number: **86850162.8**

(22) Date of filing: **05.05.86**

(54) A wheeled vehicle especially for passenger transport.

(43) Date of publication of application:
**11.11.87 Bulletin 87/46**

(45) Publication of the grant of the patent:
**19.09.90 Bulletin 90/38**

(84) Designated Contracting States:
**AT BE CH DE FR GB IT LI LU NL SE**

(56) References cited:
**EP-A- 0 047 642**
**DE-A- 2 448 723**
**US-A- 3 808 813**
**US-A- 3 842 927**

(73) Proprietor: **DAB-SILKEBORG A/S, Kejlstrupvej 71,
DK-8600 Silkeborg(DK)**

(72) Inventor: **Christensen, Anders Erik c/o LEYLAND-DAB
A/S, Kejlstrupvej 71, DK-8600 Silkeborg(DK)**

(74) Representative: **Larsen, Hans Ole et al, Larsen &
Birkeholm ApS Europaelsk Patentbureau P.O. Box 200,
DK-2630 Taastrup(DK)**

ACTORUM AG

## Description

By the design of motor vehicles for collective passenger transport in urban areas and for that matter also for tourist journeys it is strived to make comfortable room for as many passengers as possible within the frames given by an acceptable length and width of the vehicle. Especially in the case of the former, the so-called urban buses, it is difficult providing seats for an reasonable number of passengers and at the same time complying with the demands for manœuvrability and the shortest possible time for boarding and alighting at the stops. The necessary ability of performing sudden turns limits the length of the vehicle and the distance between the front wheels and the rear wheels. Usually the driver is also ticket collector, and therefore he cannot be placed in a special driving seat beside the engine block, which e.g., is the case in the transport vehicle described in US patent no. 3 253 668, but he must be placed in the passenger compartment, so that he can watch not only the traffic, but also the passengers' boarding and alighting. So the positioning of the engine block becomes a problem, and the commonest place to position it is under the floor of the bodywork and between the rear wheels and the front wheels, whereas the steering wheel and the controls are located close to the windscreen and in front of the front wheels to make space for a front door. However, this is a compromise between conflicting demands on the vehicle's useful qualities. The disadvantage of placing the engine block under the floor of the bodywork is that the latter must placed so high that it becomes necessary to install step-boxes by the doors, which not only impedes boarding and alighting, not least to handicapped persons, but also increases the risk of passengers being injured by sudden brakings. Changing the level of the body floor, e.g. a lowered central gangway as shown in US patent no. 2 425 948, should be avoided as far as possible in vehicles with frequent boarding and alighting.

The placement of the engine block under the body floor also makes replacement and repair difficult. Therefore you will also find motor vehicles for collective passenger conveyance having their engine in rear and means for a convenient disengagement of the latter. As an example can be mentioned the motor vehicle described in the above US patent which consists of coupled-up sections, one of which containing the engine block and the rear wheels, and also the motor vehicle, described in US patent no. 4 027 737 and in FR patent no. 2 127 828, which has built-in hydraulic pistons to lift the rear end of the body so that the engine block and the rear wheels become accessible for inspection or repair. The vehicle known from the FR patent no. 2 127 828 only differs from the US patent by its engine block and rear wheels being mounted in a bogie. These motor vehicles do not afford the possibility of lowering the floor, in any case not if you, as indicated in the above publications, want to place seats above the rear wheels and the engine. Even in case of an engine in rear i horizontal position it is hardly possible to lower the floor above the engine to being less that 90 cm above the roadway, and a floor passing across the differential gear of the rear wheel axle will hardly be less than 70 cm above the roadway.

Recently there have been developed methods for transmitting motive power hydraulically to the wheels instead of doing it mechanically by means of a gear.

A motor vehicle of this sort is described in DE patent no. 857 893. This vehicle has a driving mechanism consisting of an engine and a hydraulic pump placed in the hindmost part of the vehicle, said part being supported by a pair of driving wheels with a built-in hydraulic motor which functions as a pump by braking. This part of the vehicle does not constitute part of the proper body since it is hinged to the latter and separated from it by a bellows, enabling said part to perform a rocking motion in proportion to the body. This design demands a third wheel pair, or otherwise expressed, the connection with a bellows is only possible in case of vehicles with three axles. Here it is probably possible to lower the floor, as there is no wheel axle to consider and no driving engine under the floor, however, the central wheel pair means that the floor area cannot be fully utilized in this case, as the wheels cannot be placed on the outside of the body considering the maximum width of the vehicle, but have to be built in thus having to tower above a lowered floor.

The invention relates to a motor vehicle for passenger conveyance of the sort dealt with in the above DE patent application, viz. with wheels driven hydraulically and a driving unit consisting of a propulsion engine and a hydraulic pump, which together with a pair of driving wheels is designed as an independent unit, and the purpose of the invention is to create a block construction which extends the body of the motor vehicle a minimum, and which, without compromising the simple disengagement, does not demand the use of another body part. This is obtained by the propulsion unit and its belonging pressure accumulators being mounted on a carrying rack resting on a carrying frame of a pair of driving wheels with belonging hydraulic motors, said carrying rack being attached to the vehicle's body by shock absorbing and vibration damping elements, so that the rear of the vehicle is carried by the carrying rack. This design renders a third wheel pair superfluous and makes it possible to have a very compact built-up of the propelling system, which will be explained in more details in the below description of an embodiment of the invention. As it will be explained below with reference to the drawing, a pneumatic spring element can be placed between the carrying frame of the driving wheels and the carrying rack of the driving unit, and the carrying rack may be given such a form that the transfer of power from the driving wheels mainly is done to the bottom of the body, whereas the power transferred to the roof structure only will give the moment necessary to prevent the carrying rack from tilting forward.

An example of an embodiment of the invention is outlined schematically on the accompanying drawings and a more specified explanation will be given below.

Fig. 1 shows in an axonometric representation a bus with its driving block mounted at its rear end,

fig. 2 shows more in detail how the main components of the system are arranged mutually,

fig. 3 shows schematically an embodiment of a carrying rack for the driving unit and its pressure accumulators and how said rack is connected with the body,

fig. 4 shows the hydraulic circuit, and

fig. 5–11 shows the hydraulic circuit under the various forms of operation.

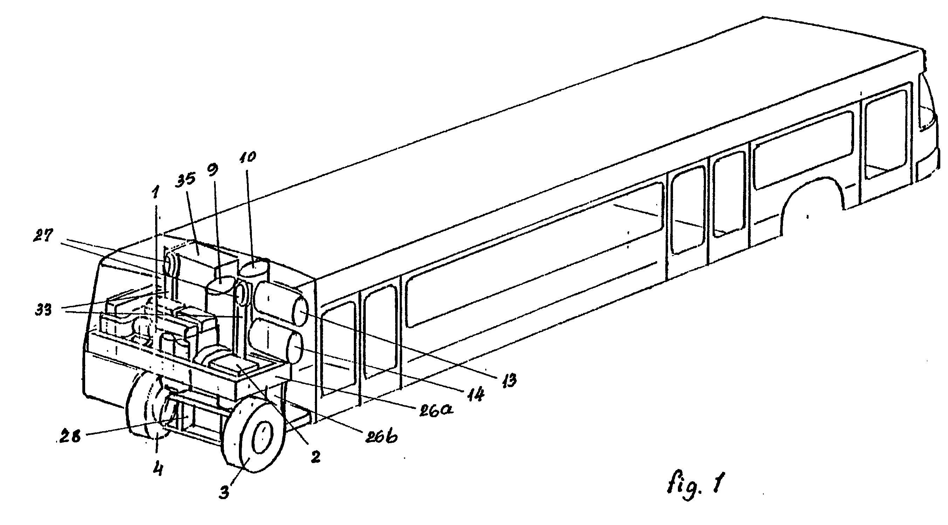

A power unit being composed of an engine, generally a diesel 1 directly coupled to a hydraulic pump 2 with variable performance, is mounted transversely in proportion to the longitudinal axis of the vehicle and so high that it is clear of the vehicle's driving wheels 3 and 4 and of the structural elements, ensuring the driving wheels their correct position and spring suspension in proportion to the rest of the power unit. Behind the power unit a tank 35, fig. 1, for the fuel of the engine 2, is fitted.

The driving wheels may be single or dual wheels. In direct driving connection with the driving wheels are the two hydraulic motors 7 and 8 and they are driving/driven through the planet wheel gears 5 and 6. The motors 7 and 8 have variable performance and may be made so that they can operate as pumps.

Immediately in front of the power unit 1–2 there is placed an accumulator 9 for storing energy under high pressure and an accumulator 10 for storing hydraulic liquid under low pressure, both said accumulators standing vertically.

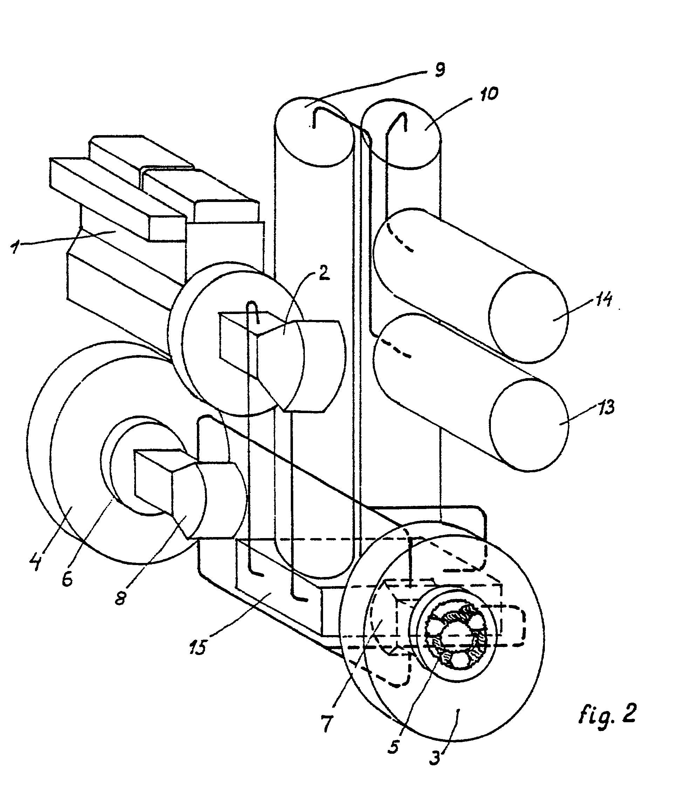

The high-pressure accumulator 9 by tubes is connected up with an additional tank 13 for gas under high pressure, and the low-pressure accumulator 10 with an additional tank 14 for air under low pressure, as it will be explained in detail in connection with figure 2.

The connections between the above hydraulic units mainly are made through valves assembled in a valve block 15, which at the same time forms one end of as well the high-pressure as of the low-pressure accumulator.

The whole driving unit including the driving engine and the driving wheels is controlled by means of a control computer not shown, which in accordance with a control programme converts the actions given to the accelerator and the brake pedal by the driver.

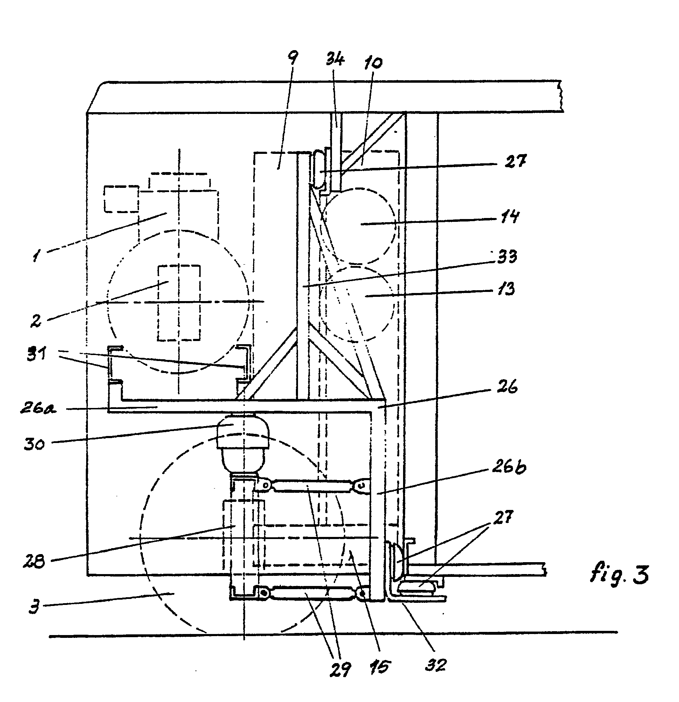

The mounting of the driving unit and of the pressure accumulators on a carrying rack, so that they together with the driving wheels form a compact unit easily removable from the body, appears from fig. 3 in combination with fig. 1. The main element of the carrying rack are two girders 26 which, like the remaining carrying elements, may be made of light-alloy metal or be a lightweight steel section. These girders have horizontal arms 26a bearing transversal supports 31 for the driving unit, consisting of the engine 1 and the hydraulic pump 2, and vertical arms 26b below provided with bearing elements or beams 32 supporting the hindmost part of the body. The girders 26 are supported by pneumatic springs 30 which are placed between the former and an axle bearing for the wheel pair 3 and 4. The frame 28 of the axle bearing is kept in the correct position in proportion to the girder by reaction arms 29 attached to the vertical arms 26b and by a Panhard rod not shown. Two stanchions 33 with belonging struts are attached to the girders 26. At their upper ends these stanchions are attached to the rests 34, which again are attached to the bearing structural parts of the roof of the body. The rests 34 and their attachment to the roof of the body are not shown in fig. 1, as part of the body has been removed from this figure in order to show the details of the driving block. As well between the stanchions 33 and their rests 34 as between the bearing elements 32 and the bottom of the body shock-absorbing rubber elements 27 are fitted.

As it is indicated with dotted lines, there is space between the girders 26 and the wheel pairs 3 and 4 for a vertical mounting of the pressure accumulators 9 and 10, and of the pressure gas and pressure air tanks 13 and 14. With the special design of the carrying rack there is obtained an extremely compact structure of the driving block which is easily detachable from the body for repair or replacement. The motive power and the brake forces at the same time are transferred very directly from the axle-frame 28 to the bottom structure of the body. Add to this that the stanchion 33 together with the girder's vertical arm 26b act as a lever, which means that the remaining stress on the body mainly is transferred to its bottom structure.

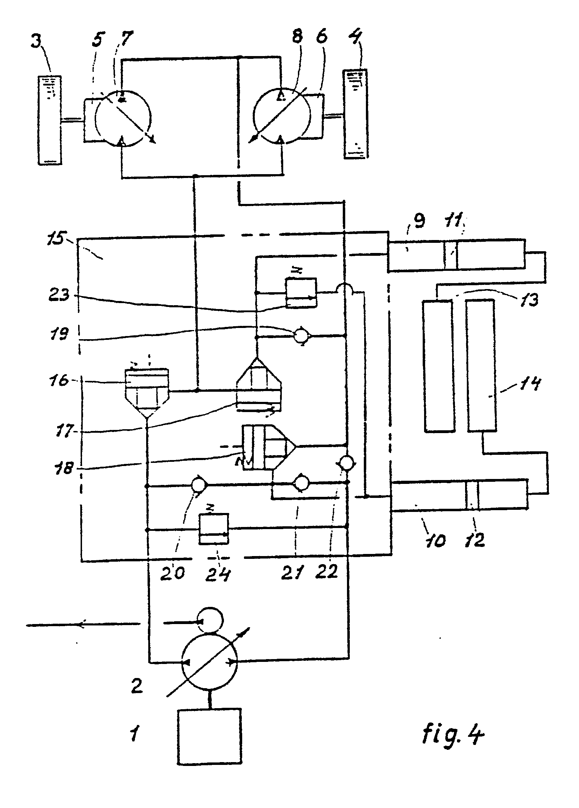

An embodiment of the hydraulic circuit and of the regulating valve system is shown schematically in fig. 4.

As earlier described a driving engine 1 is directly coupled with a hydraulic pump 2. The driving wheels 3 and 4 are mechanically connected with the hydraulic motors 7 and 8 through the gears 5 and 6; the hydraulic motors 7 and 8 can also operate as pumps. The hydraulic pump 2 and the hydraulic motors 7 and 8 are – through a valve block 15 – partly mutually connected by tubes and partly connected by tubes with a high-pressure accumulator 9 and a low-pressure accumulator 10.

The high-pressure accumulator 9 is divided into a liquid chamber and a gas chamber by a sliding piston 11 and tube-connected with a high-pressure gas tank 13. Similarly the low-pressure accumulator 10 is divided by a piston 12 into a liquid chamber and an air chamber which is tube-connected with a low-pressure tank 14.

In the valve block 15 three control valves 16, 17 and 18 are installed, and they can be opened and closed by means of a hydraulic control system.

Further four non-return valves 19, 20, 21 and 22 and also two escape valves 23 and 24 are installed there.

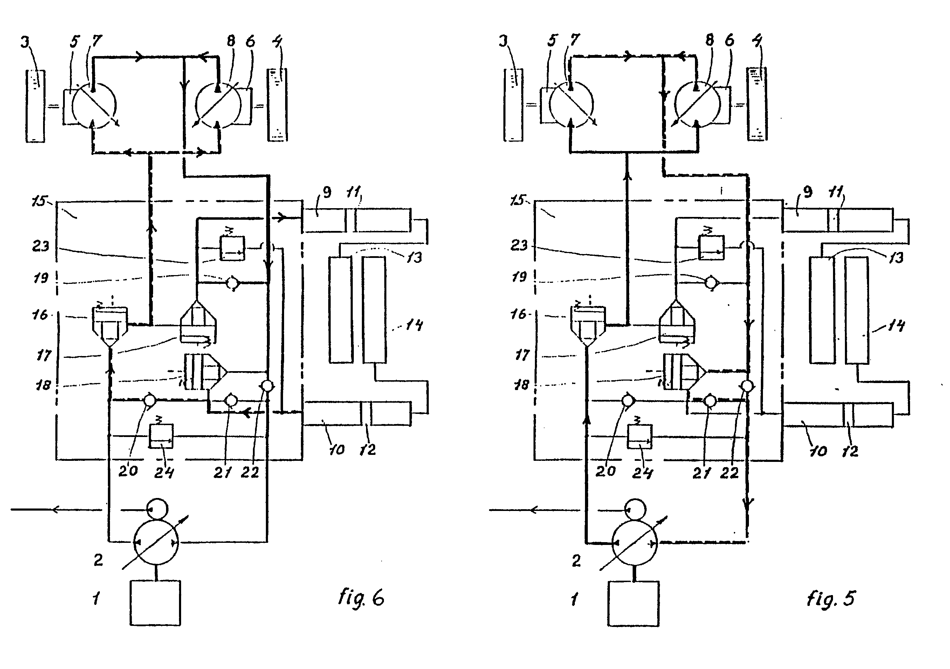

The usual functioning methods of the hydraulic system appear from the figures 5–11.

The normal operating manner is shown in fig. 5. The driving engine 1 drives the hydraulic pump, 2; through the full-drawn piping the pump sends a liquid flow with high pressure through the valve 16 to the two hydraulic motors 7 and 8, which again drive the vehicle's driving wheels 3 and 4 through the gears 5 and 6.

Under a low pressure the liquid flow is carried back through the piping shown by a dotted line, viz. through the valve 18 and the non-return valve 21 and back to the pump 2.

The velocity of the liquid flow and with that the travelling speed are regulated by setting the output of the pump in a well-known manner.

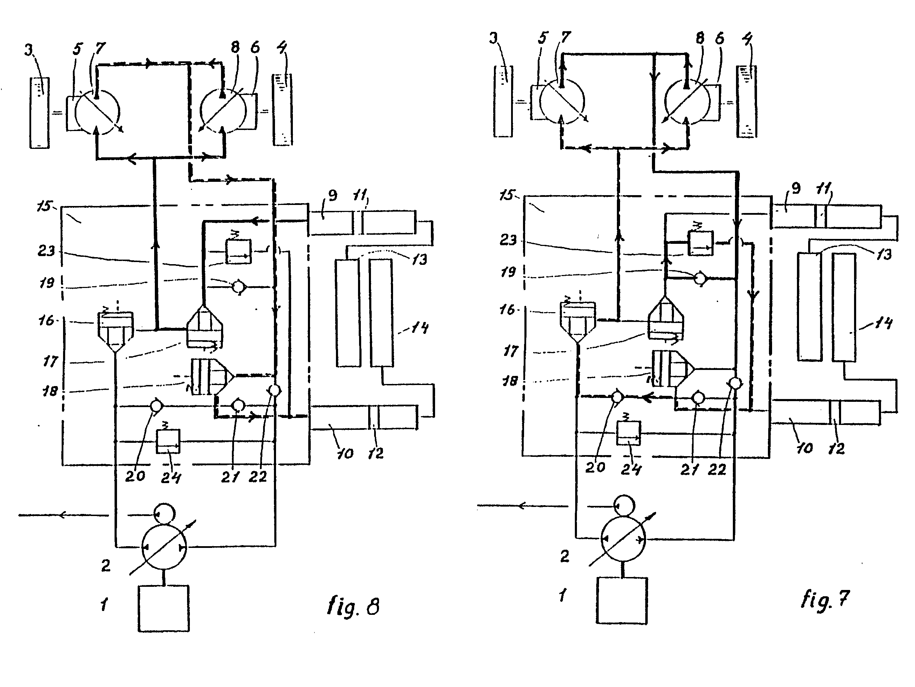

Braking the vehicle hydraulically generally takes place as indicated in fig. 6.

The hydraulic motors 7 and 8 operate as pumps and carry the hydraulic liquid to the high-pressure accumulator 9 through the full-drawn pipings and the non-return valve 19 in the valve block 15, hereby compressing the inactive gas, normally nitrogen, in that tank and the high-pressure gastank 13 connected with it.

The pressure rises to a beforehand appointed maximum, unless the braking stops before the maximum pressure is reached. Hydraulic liquid under a low pressure is carried to the hydraulic motors 7 and 8 from the low-pressure accumulator 10 through the piping shown by a dotted line, via the non-return valve 20 and the control valve 16.

If the braking continues after that the maximum pressure has been reached in the accumulator 9 and the gastank 13, the circuit is changed as indicated in fig. 7. The escape valve 23 starts working, by which the hydraulic motors 7 and 8 pump the hydraulic liquid into a closed circuit through the non-return valves 19 and 20 and the control valve 16, such as it is indicated by the full-drawn high-pressure pipings and by the dotted low-pressure pipings.

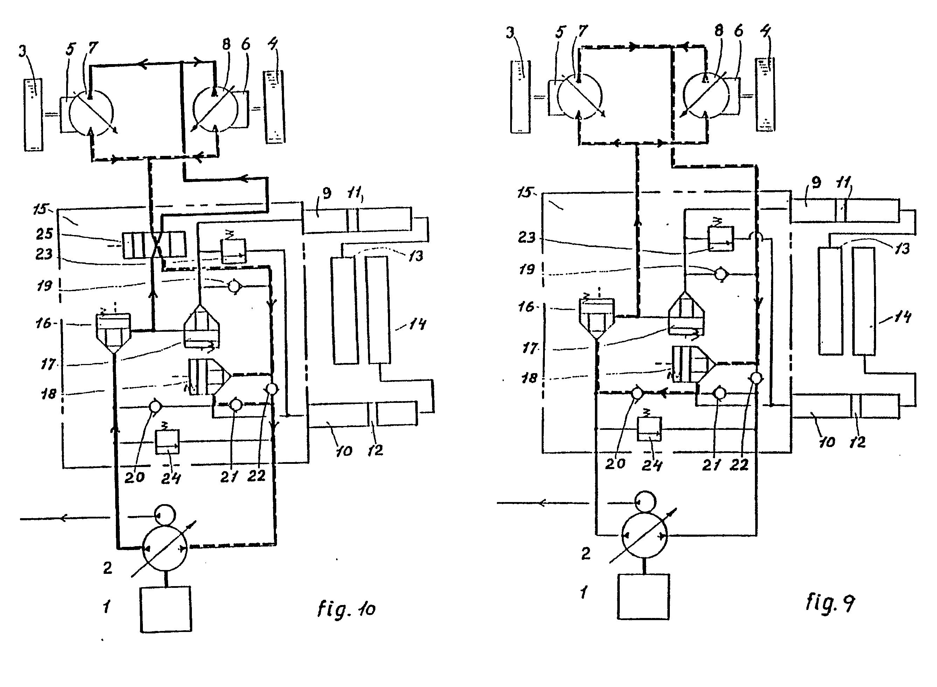

The energy accumulated in the high-pressure accumulator 9 and in the high-pressure airtank 13 can be utilized as a means of propulsion at the vehicle's start from the bus stop and its acceleration, and the circuit will be as shown in fig. 8.

Liquid under a high pressure will be conducted through the full-drawn pipings and the control valve 17 from the high-pressure accumulator 9 to the hydraulic motors 7 and 8, which again drive the vehicle's driving wheels 3 and 4.

At low pressure the hydraulic liquid is conducted on from the hydraulic motors through the pipes shown with a dotted line and the control valve 18 to the low-pressure accumulator 10.

The free-wheeling setting, by which the vehicle's driving wheels neither will be influenced by driving nor bracking forces, can be established by the circuit indicated dotted in fig. 9, where the liquid at low pressure is free to circulate through the hydraulic motors 7 and 8, the control valves 18 and 16 and the non-return valve 20.

As an alternative free-wheeling can be established by means of hydraulic motors 7 and 8 designed so that they can be set not to carry any hydraulic liquid when free-wheeling.

By the system described, backward driving – backing – as an example can be arranged as indicated in fig. 10, in which a cross-valve 25 in the valve block 15 turn the in fig. 3 shown high-pressure and low-pressure liquid flows which are conducted to and from the hydraulic motors 7 and 8.

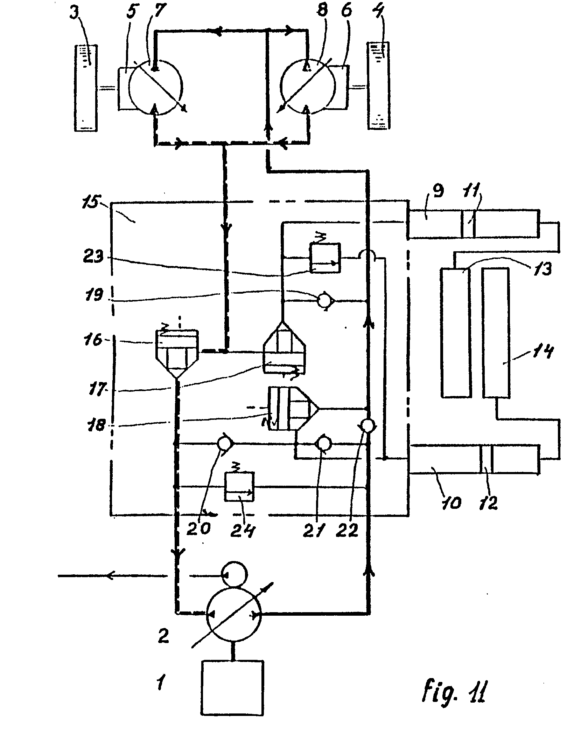

Alternatively backing can be arranged by making the hydraulic pump 2 so that it can be reversed so that the high-pressure liquid, as shown in fig. 11, through the non-return valve 22 can be conducted from the hydraulic pump 2 to the hydraulic motors 7 and 8, and so that the low-pressure liquid can be returned through the control valve 16.

The control valves operating the hydraulic circuits are arranged so that during the vehicle's normal working operations the hydraulic liquid will be conducted to the valve in order that the liquid flow is opposite the movement of the valve spindles, when the latter are closed against the valve seats.

By that the closing movement will be controlled by the impulses from the separate hydraulic control system in a very reliable way.

Further the control valves are arranged in such a manner in the liquid circuits that the valves when reversed from the normal working operation to another perform a closing movement.

By that a very smoothly gliding change of the liquid flow passing the valve is obtained and therefore a very smooth driving without jerks.

As it appears, the invention does not interfere with the design of the body, except for the insignificant change necessary for the attachment of the driving block, but it augments the possibility of designing the body exclusively considering the comfort of the passengers and the driver.

**Claims**

1. A collective passenger transport vehicle with hydraulically driven wheels and having a driving unit consisting of a driving engine (1) and a hydraulic motor (2), which together with a pair of driving wheels (3 and 4) is designed as an independent part of the vehicle and **characterized in** that the driving unit (1,2) with its fuel tank (35) and the pressure accumulators (9 and 10) for storing brake energy are placed on a carrying rack (26) resting on a carrying frame (28) for the driving wheel pair (3 and 4), said carrying rack by shock and vibration damping elements (27) being attached to the body of the vehicle, so that the rear end of the body of the vehicle is carried by said rack (26).

2. A vehicle according to claim 1, **characterized in** that the carrying rack (26) consists of two girders with horizontal arms (26a) resting on the carrying frame (28) and having transversal supports (31) for the driving unit (1, 2) and vertical arms (26b) below provided with bearing devices (32) which support the rear end of the body, and that the carrying rack has stanchions (33) the upper end of which are attached to rests (34), which again are attached to the roof of the body.

3. A vehicle according to claim 2, **characterized in** that pneumatic springs (30) are mounted between the carrying frame (28) of the driving wheel pair (3 and 4) and the horizontal arms (26a), and that the carrying frame (28) is connected with the vertical arms (26b) by reaction arms (29).

4. A vehicle according to claim 2, **characterized in** that the pressure accumulators (9 and 10) are placed standing vertically in front of the driving unit (1,2) and between the horizontal arms (26a).

5. A vehicle according to claim 4, **characterized in** that the pressure accumulators at their bottom are ending in a common valve block (15) to which all control and pressure pipes are connected up.

## Patentansprüche

1. Fahrzeug für den gemeinsamen Transport von Reisenden mit hydraulisch angetriebenen Rädern und einer Antriebseinheit, die aus einer Antriebsmaschine (1) und einem Hydraulikmotor (2) besteht, die zusammen mit einem Paar Antriebsrädern (3 und 4) als ein unabhängiges Teil des Fahrzeugs aufgebaut ist und dadurch gekennzeichnet, daß die Antriebseinheit (1, 2) mit ihrem Kraftstofftank (35) und den Drucksammlern (9 und 10) zur Speicherung von Bremsenergie auf einem Traggerüst (26) angeordnet sind, das auf einem Tragrahmen (28) für das Antriebsräderpaar (3 and 4) ruht, wobei das Traggerüst durch Stoß- und Schwingungsdämpferelemente (27) an dem Körper des Fahrzeugs derart angebracht ist, daß das hintere Ende des Fahrzeugkörpers von dem Gerüst (26) getragen wird.

2. Fahrzeug nach Anspruch 1, dadurch gekennzeichnet, daß das Traggerüst (26) aus zwei Trägern mit horizontalen Armen (26a) besteht, die auf dem Tragrahmen (28) ruhen und die Querträger (31) für die Antriebseinheit (1, 2) und vertikale Arme (26b) aufweist, die unten mit Lagerelementen (32) versehen sind, die das hintere Ende des Körpers abstützen, und daß das Traggerüst Ständer (33) aufweist, deren obere Enden an Haltern (34) befestigt sind, die wiederum am Dach des Körpers befestigt sind.

3. Fahrzeug nach Anspruch 2, dadurch gekennzeichnet, daß pneumatische Federn (30) zwischen dem Tragrahmen (28) des Antriebsräderpaares (3 und 4) und den horizontalen Armen (26a) montiert sind, und daß der Tragrahmen (28) mit den vertikalen Armen (26b) durch Reaktionsarme (29) verbunden ist.

4. Fahrzeug nach Anspruch 2, dadurch gekennzeichnet, daß die Drucksammler (9 und 10) vertikal stehend vor der Antriebseinheit (1, 2) und zwischen den horizontalen Armen (26a) angeordnet sind.

5. Fahrzeug nach Anspruch 4, dadurch gekennzeichnet, daß die Drucksammler an ihrer Unterseite in einem gemeinsamen Ventilblock (15) enden, an den alle Steuer- und Druckleitungen angeschlossen sind.

## Revendications

1. Véhicule pour le transport de voyageurs avec des roues à commande hydraulique et ayant une unité de commande constituée d'un moteur de commande (1) et d'un moteur hydraulique (2) qui, conjointement avec une paire de roues motrices (3 et 4), est conçu comme une partie indépendante du véhicule, et caractérisé en ce que l'unité de commande (1, 2), avec son réservoir à carburant (35) et les accumulateurs de pression (9 et 10) pour le stockage de l'énergie d'assistance de freinage, sont placés sur un bâti transporteur (26) reposant sur un châssis transporteur (28) pour la paire de roues de commande (3 et 4), ledit bâti transporteur étant fixé au corps du véhicule au moyen d'éléments (27) amortisseurs de chocs et de vibrations, de sorte que l'extrémité arrière du corps du véhicule est porté par ledit bâti (26).

2. Véhicule selon la revendication 1, caractérisé en ce que le bâti transporteur (26) est constitué de deux poutres avec des bras horizontaux (26a) reposant sur le châssis transporteur (28) et ayant des supports transversaux (31) pour l'unité de commande (1, 2) et des bras verticaux (26b) munis en-dessous de dispositifs de support (32) qui portent l'extrémité arrière du corps, et en ce que le bâti transporteur comporte des ranchers (33) dont l'extrémité supérieure est fixée sur des supports (34) qui à leur tour sont fixés au toit du corps.

3. Véhicule selon la revendication 2, caractérisé en ce que des ressorts pneumatiques (30) sont montés entre le châssis transporteur (28) de la paire de roues motrices (3 et 4) et les bras horizontaux (26a), et en ce que le châssis transporteur (28) est raccordé aux bras verticaux (26b) par des bras de réaction (29).

4. Véhicule selon la revendication 2, caractérisé en ce que les accumulateurs de pression (9 et 10) sont placés debout verticalement face à l'unité de commande (1, 2) et entre les bras horizontaux (26a).

5. Véhicule selon la revendication 4, caractérisé en ce que le fond des accumulateurs de pression se termine en un bloc de vannes commun (15) auquel sont raccordés tous les tuyaux de commande et de pression.

fig. 1

fig. 2

fig. 3

fig. 4

fig. 5

fig. 6

fig. 8

fig. 7

EP 0 244 549 B1

fig. 10

fig. 9

EP 0 244 549 B1

Fig. 11